## Europäisches Patentamt
## European Patent Office
## Office européen des brevets

(19)

(11) Veröffentlichungsnummer: **0 196 080**
**B1**

(12)

# EUROPÄISCHE PATENTSCHRIFT

(45) Veröffentlichungstag der Patentschrift: **22.11.90**

(21) Anmeldenummer: **86104134.1**

(22) Anmeldetag: **25.03.86**

(51) Int. Cl.⁵: **E 05 C 19/14, E 05 C 1/06, B 62 D 27/06**

(54) **Riegelspannverschluss für Türen, abklappbare Bordwände oder dergleichen von Aufbauten von Nutzfahrzeugen.**

(30) Priorität: **25.03.85 DE 8508835 u**
**25.03.85 DE 8508833 u**
**25.03.85 DE 8508832 u**
**25.03.85 DE 8508831 u**

(43) Veröffentlichungstag der Anmeldung:
**01.10.86 Patentblatt 86/40**

(45) Bekanntmachung des Hinweises auf die Patenterteilung:
**22.11.90 Patentblatt 90/47**

(84) Benannte Vertragsstaaten:
**AT BE CH DE FR GB IT LI LU NL SE**

(56) Entgegenhaltungen:
**EP-A-0 066 297**
**WO-A-83/01420**
**DE-C-1 678 155**
**US-A-2 703 431**

(73) Patentinhaber: **F. HESTERBERG & SÖHNE GmbH & Co. KG**
**Heilenbecker Strasse 50-60**
**D-5828 Ennepetal 1 (DE)**

(72) Erfinder: **Sterner, Bernd**
**Am Waldesrand 2**
**D-5800 Hagen 1 (DE)**
Erfinder: **Nieland, Friedhelm**
**Bonkampstrasse 40**
**D-5805 Breckerfeld (DE)**
Erfinder: **Feinbier, Joachim**
**Buntebach 12**
**D-5828 Ennepetal 15 (DE)**

(74) Vertreter: **Kneissl, Richard, Dr. et al**
**Patentanwälte Andrae, Flach, Haug, Kneissl**
**Steinstrasse 44**
**D-8000 München 80 (DE)**

Courier Press, Leamington Spa, England.

## Beschreibung

Die vorliegende Erfindung betrifft Verbesserungen und Weiterbildungen des im Oberbegriff des Hauptanspruchs skizzierten und aus der DE—PS 16 78 155 bekannten Riegelspannverschlusses. Dieser bekannte Verschluß findet ausgedehnte Verwendung bei Aufbauten von Lastkraftfahrzeugen, und zwar insbesondere zum Verriegeln von abklappbaren Bordwänden gegen ein festes Teil des Aufbaus, wie z.B. eine Runge.

Der bekannte Riegelverschluß weist verschiedene Nachteile auf. So kann seine Handhabe beim Öffnen nicht allzu weit umgelegt werden, wodurch es beim Herunterklappen der Bordwand zu Schäden im unteren Teil des Fahrzeugs, wie z.B. an den Reifen, kommen kann. Außerdem ist er im unverspannten Zustand und insbesondere nach längerem Gebrauch sehr leichtgängig. Wird die Bordwand abgeklappt, so kann es vorkommen, daß der Handhebel ausschwenkt, wodurch die genannten Gefahren noch verstärkt werden und es sogar zu Verletzungen der an der Bordwand hantierenden Personen kommen kann. Durch die kennzeichnenden Maßnahmen des Hauptanspruch wird erreicht, daß die Handhabe weiter umgelegt werden kann als bei dem bekannten Verschluß und daß sie beim Abklappen der Bordwand in der vollständig umgelegten Lage bleibt.

Beim Öffnen des Verschlusses durch Ausschwenken der Handhabe wird zunächst die Spannung weggenommen, worauf dann die Achse im Langloch entlanggleitet. Erst wenn die Achse am anderen Ende des Langlochs in Anlage gekommen ist, wird beim weiteren Ausschwenken der Handhabe der Riegel vorgeschoben, wobei dessen Eingriffsteil vom Gegenelement freikommt. Die auf die Anlenkachse wirkende Feder und die zwischen dem Riegelstumpf und der Einbauwanne angeordnete Feder sorgen dabei für die Einhaltung der voll ausgeschwenkten Lage der Handhabe.

Bei dem bekannten Verschluß hat es sich als nachteilig erweissen, daß die Länge des Riegels durch Hinein- oder Herausschrauben des Eingriffsteils in den bzw. aus dem Riegelstumpf ziemlich genau eingestellt werden muß, um die richtige Spannung und damit ein sicheres Schließen zu gewährleisten. Wenn beim erfindungsgemäßen Verschluß die Feder, die an der durch das Langloch hindurchgehenden Achse angreift, entsprechend stark ausgebildet ist, dann ergibt sich eine federnde Nachgiebigkeit des Riegels, was den genannten Nachteil beseitigt. Wenn der Riegel beispielsweise zu kurz eingestellt ist, so gibt er beim Verriegeln nach. Dies ist auch beim Transport wichtig. Es ist beim Transport von Lasten nicht zu verhindern, daß sich die Aufbauten durchbiegen oder verwinden, so daß unter Umständen erhebliche Kräfte am Riegelspannverschluß und auch an den Teilen, an denen er befestigt ist, auftreten können. Solche übermäßigen Kräfte können bei diesem Verschluß nicht mehr auftreten.

Die Ansprüche 2 und 3 betreffen eine vorteilhafte Ausgestaltung und Unterbringung der zwischen dem Riegelstumpf und der Einbauwanne angeordneten Feder, während der Anspruch 4 eine bevorzugte Unterbringung der auf die Anlenkachse zwischen der Handhabe und dem Verbindungsglied wirkenden Feder zum Gegenstand hat.

Zwar ist beim erfindungsgemäßen Verschluß Verriegelungsstellung durch die genannte Übertotpunktlage der Achse zwischen der Handhabe und dem Verbindungsglied gesichert. Um aber die eingeschwenkte Lage der Handhabe noch weiter zu sichern, kann diese nocht mit einer Sicherung versehen sein, beispielsweise mit der, die in den Ansprüchen 5 bis 8 beschrieben ist. Diese Sicherung hat den Vorteil, daß sie leicht ausgebaut und durch ein Zylinderschloß ersetzt werden kann, sollte es sich später notwendig erweisen, den Verschluß absperrbar zu machen.

Bei dem eingangs erörterten bekannten Verschluß besitzt das in den Riegelstumpf eingeschraubte Verriegelungsglied an seinem freien Ende einen Haken mit Rücksprung, der in Verriegelungsstellung hinter eine Leiste einer als Gegenelement dienenden Tasche greift. Ein solcher Verschluß besitzt nur ein Heranholvermögen in der Ebene der Bordwand, nicht aber senkrecht dazu, was sich als nachteilig erwiesen hat, wenn beispielsweise die Bordwand verbogen ist oder aus anderen Gründen, beispielsweise Druck auf die Innenseite der Bordwand durch das Lagegut, nicht vollständig geschlossen werden kann. Durch die Maßnahmen des Anspruchs 9 wird dieser Nachteil beseitigt. Die Auflaufflächen geben dem neuen Verschluß auch ein Heranholvermögen senkrecht zur Bordwandebene. Die sich an die geneigten Auflaufflächen anschließenden Anlageflächen gewährleisten, daß bei Innendruck auf die Bordwand der Druck durch sich senkrecht zur Druckrichtung erstreckende Flächen übertragen wird, so daß in diesem Fall keine Kräfte in Verriegelungsrichtung auftreten. Ebenso verhindern die zur Verriegelungsrichtung senkrechten Druckflächen, daß am Riegel unerwünschte Kräfte auftreten, die versuchen, den Haken aufzubiegen. Dies wäre beispielsweise der Fall, wenn der Verschluß nur die genannten Auflaufflächen hätte.

Durch die neuartige Ausbildung des Hakens und der Tasche wird nicht nur ein Heranholvermögen in einer Ebene senkrecht zur Bordwand erreicht, sondern er wird auch die Zugfestigkeit des Riegelverschlusses erheblich gesteigert. Bei Zugfestigkeitsversuchen an bekannten Riegelspannverschlüssen der in Rede stehenden Art hat sich immer wieder gezeigt, daß die schwächste Stelle des Verschlusses am Haken zu finden ist, da dieser zu einem Aufbiegen neigt.

Bei der Weiterbildung des Anpruchs 10 ist die Ausnehmung im zurückspringenden Ende des Hakens in der Mitte des zurückspringenden Endes ausgebildet, wodurch am zurückspringenden Teil zwei Zinken entstehen, von denen jeder eine Auflauffläche trägt.

Eine Ausfürungsform eines erfindungsgemäßen Riegelspannverschlusses wird nun anhand der beigefügten Zeichnungen näher erläutert.

In den Zeichnungen zeigen:

Fig. 1 eine Aufsicht auf den erfindungsgemäßen Verschluß;

Fig. 2 einen Schnitt an der Linie II—II von Fig. 1, wobei außerdem einige Teile zu sehen sind, in die der Verschluß sowie die Tasche eingebaut sind;

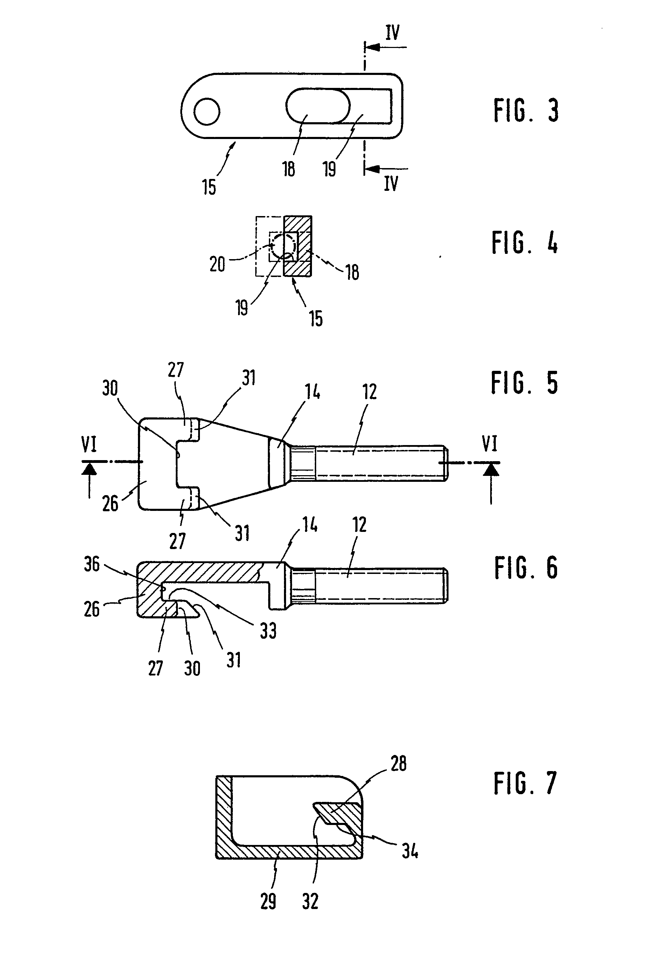

Fig. 3 eine Hälfte des Verbindungsglieds;

Fig. 4 einen Schnitt an der Linie IV—IV von Fig. 3;

Fig. 5 eine Unteransicht des Eingriffsteils;

Fig. 6 eine Seitenansicht des Eingriffsteils, das teilweise an der Linie VI—VI von Fig. 5 geschnitten ist;

Fig. 7 einen Schnitt durch die Tasche an der Linie VII—VII von Fig. 1;

Fig. 8 eine Unteransicht der Handhabe im Bereich der Sicherung; ·

Fig. 9 eine Aufsicht auf die Handhabe im Bereich der Sicherung, die hier jedoch aus einem Zylinderschloß besteht;

Fig. 10 eine Seitenansicht des Riegelstumpfs;

Fig. 11 eine Vorderansicht des Riegelstumpfs; und

Fig. 12 eine Unteransicht des Riegelstumpfs.

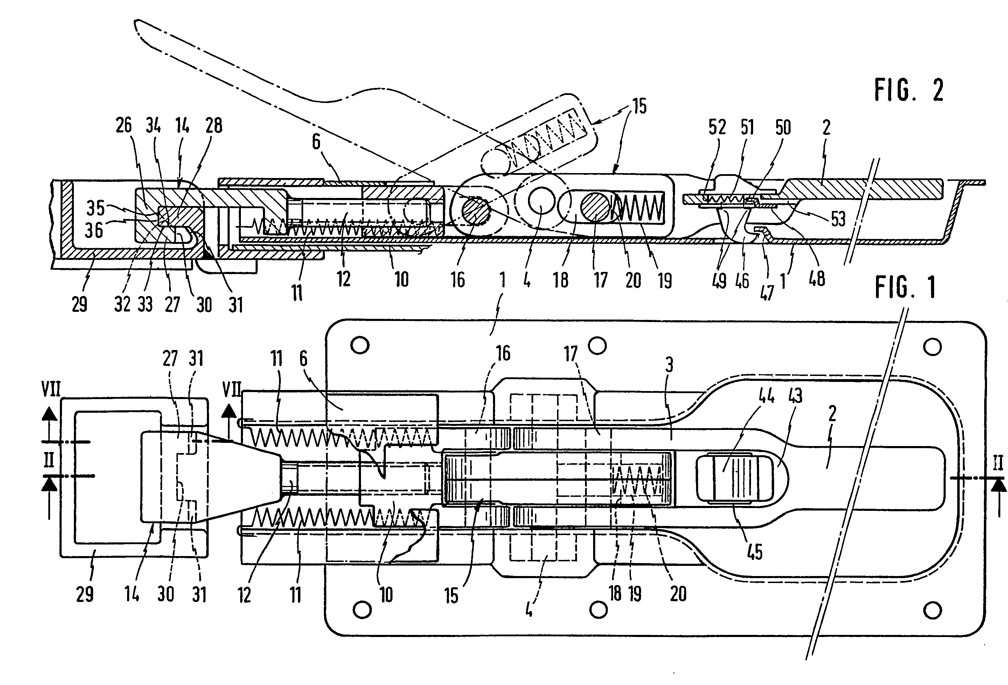

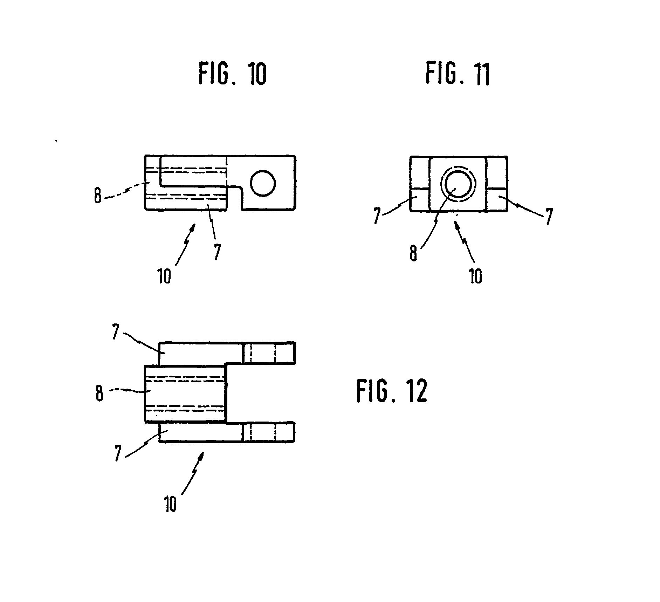

Gemäß den Figuren 1 und 2 besitzt der Riegelspannverschluß eine Einbauwanne 1, wie sie bei Verschlüssen dieser Art üblich ist. In der Einbauwanne 1 ist eine Handhabe 2 angelenkt. Das angelenkte Ende 3 der Handhabe 2 ist gabelförmig ausgebildet und mit Hilfe von Achsen 4 in den Seitenwandungen der dort verstärkten Einbauwanne 1 gelagert. In der Einbauwanne 1 ist weiterhin unterhalb einer Abdeckplatte 6 ein Riegelstumpf 10 längsverschieblich gelagert. Der Riegelstumpf besitzt auf seiner Unterseite zwei Auskehlungen 7. Außerdem weist er eine Gewindebohrung 8 auf (siehe Fig. 10, 11 und 12). Am rückwärtigen Ende ist er gabelförmig ausgebildet und besitzt dort Bohrungen für die Aufnahme einer Achse 16, mit deren Hilfe ein Ende eines Verbindungsglieds 15 am Riegelstumpf 10 angelenkt ist. Das Verbindungsglied 15 besteht aus zwei spiegelbildlichen Platten, die im Bereich des anderen Endes ein Langloch 18 und eine sich daran anschließende Vertiefung 19 aufweisen. In den Vertiefungen 19 ist eine Druckschraubenfeder 20 angeordnet, die sich mit einem Ende an einer Achse 17 abstützt, die die Handhabe 2 mit dem Verbindungsglied 15 verbindet. In die Gewindebohrung 8 des Riegelstumpfs 10 ist ein Verriegelungsglied 12 eingeschraubt. Durch Verdrehen des Verriegelungsglieds 12 bezüglich des Riegelstumpfs 10 kann die Länge des Riegels eingestellt werden. Das Verriegelungsglied 12 trägt an seinem äußeren Ende ein Eingriffsteil 14.

Es ist ersichtlich, daß in Verriegelungsstellung sich die Achse 17 bezüglich der Achsen 4 und 16 in einer Übertotpunktlage befindet, wodurch die Handhabe 2 niedergehalten wird, wenn der Verschluß geschlossen ist. Beim Öffnen des Verschlusses wandert die Achse 14 innerhalb des Langlochs 18 von der mit ausgezogenen Linien dargestellten Lage in die strichpunktierte Lage. Dadurch wird die Handhabe 2 in einem größtmöglichen Öffnungswinkel gehalten. Beim Schließen des Verschlusses durch Verschwenken der Handhabe 2 wird der Riegel 10, 12 zunächst zurückgezogen, bis er auf Widerstand stößt, worauf die Druckschraubenfeder 20 zusammengedrückt wird, wenn die Achse 17 von einem Ende des Langlochs 18 in Richtung auf dessen anderes Ende wandert. Wenn die Länge des Riegels richtig eingestellt ist, befindet sich die Achse 17 etwa in der in den Figuren 1 und 2 dargestellten Lage, so daß der Riegel 10, 12 noch einige Millimeter nachgeben kann, bevor die Achse 17 das Ende des Langlochs erreicht.

Zwischen der Vorderkante der Einbauwanne 1 und dem Riegelstumpf 10 sind zwei Zugschraubenfedern 11 gespannt. Die Zugschraubenfedern 11 sind einerseits an der Stirnseite der Einbauwanne und andererseits an der Achse 16 eingehakt. Die Zugschraubenfedern können aber auch an anderer Stelle des Riegelstumpfs 10 eingehakt sein, wie z.B. im rückwärtigen Ende der Gewindebohrung 8 des Riegelstumpfs 10. Diese Zugschraubenfedern 11 ziehen in der Offenstellung des Verschlusses den Riegel 10, 12 in die voll ausgefahrene Stellung und drängen damit auch die Handhabe 2 in eine voll ungelegte Stellung. Ein Baumeln der Handhabe 2 wird dadurch vermieden. Außerdem kann es nicht mehr zu Beschädigung von Fahrzeugreifen beim Abklappen einer Bordwand kommen.

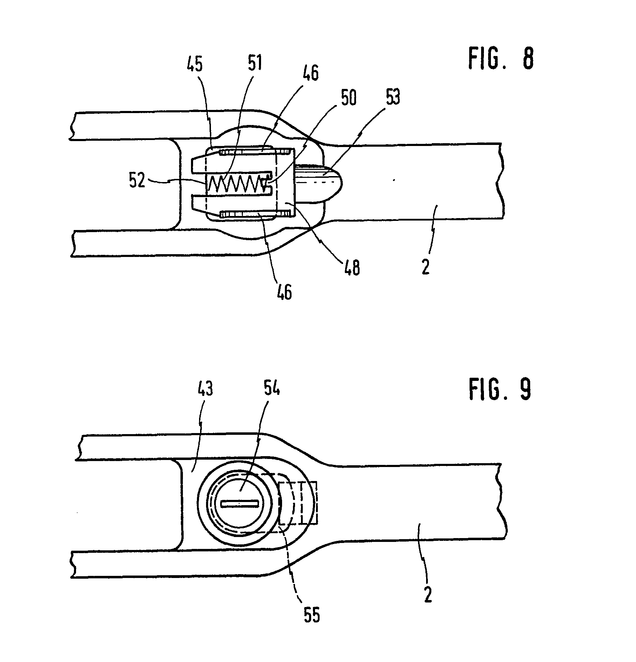

Zur weiteren Sicherung der Handhabe 2 in Verriegelungsstellung ist auf der Handhabe 2 ein Schieber 44 angeordnet, and den zwei seitliche Haken 46 angeformt sind. Die Haken 46 ragen durch eine Ausnehmung 45 hindurch, die in einer Absenkung 43 der Handhabe 2 ausgebildet ist. In Längsrichtung zur Handhabe 2 besitzt der Schieber 44 eine Länge, so daß er die Aussparung 45 überbrückt und somit auf der Handhabe 2 gleiten kann. In Sicherungsstellung greifen die Haken 46 in einen Gegenhaken 47 an der Einbauwanne 1 eine. In die beiden Haken 46 sind im Bereich der unteren Oberfläche der Handhabe 2 jeweils zwei stufenförmige Ausnehmungen 49 eingearbeitet, in welche eine U-förmige Spreizblattfeder 48 (Figur 8) einrastet. Diese Spreizblattfeder besitzt in Erstreckungsrichtung der Handhabe 2 ebenfalls eine Länge, daß sie die Aussparung 45 überbrückt. Der Schieber 44 wird dadurch festgehalten. Die Spreizblattfeder 48 besitzt einen gekröpften Ansatz 50. Zwischen dem gekröpften Ansatz 50 und der gegenüberliegenden seitlichen Begrenzung 52 der Aussparung 45 is eine vorgespannte Druckschraubenfeder 51 eingesetzt, wobei das Ende des gekröpften Ansatzes 50 in das eine Ende der Druckschraubenfeder 51 vorspringt. Diese Druckschraubenfeder 51 drückt den Schieber 44 in Sicherungsstellung. Eine Auskehlung 53 an der Unterseite der Handhabe 2 erleichtert das Einsetzen der Feder 51 und der Spreizblattfeder 48 beim Einbau der Sicherung.

Es ist ohne weiteres ersichtlich, daß die Sicherung dadurch rasch ausgebaut werden kann, daß man die freien Enden der U-förmigen Spreizblattfeder 48 mit einer geeigneten Zange ergreift und zusammendrückt. Sie kann dann aus den stufenförmigen Ausnehmungen 9 herausgenommen werden, worauf der Schieber 44 aus der Aussparung 45 nach oben herausgezogen werden kann.

Gemäß Figur 9 ist der Schieber 44 durch ein Zylinderschloß 54 ersetzt, das mit seiner Schließzunge 55 in Sicherungsstellung unter den Gegenhaken 47 greift.

Das Eingriffsteil 14 des Verriegelungsglieds 12 besitzt einen Haken 26 mit zurückspringendem Ende 27, der in Verriegelungsstellung eine Leiste 28 in einer Tasche 29, die als Gegenelement dient, hintergreift. In der Mitte des zurückspringenden Endes 27 des Hakens 26 ist eine Ausnehmung 30 vorgesehen. Außerhalb der Ausnehmung 30 besitzt das zurückspringende Ende 27 des Hakens 26 Auflaufflächen 31, denen Auflaufflächen 32 in der Tasche 29 entsprechen. Eine Anlagefläche 33 des zurückspringenden Endes 27 des Hakens 26 liegt in Verriegelungsstellung an einer entsprechenden Anlagefläche 35 unterhalb der Leiste 28 an. Im Bereich der Ausnehmung 30 liegt in Verriegelungsstellung die als Druckfläche 35 dienende Seitenkante der Leiste 28 an einer entsprechenden Druckfläche 36 am Grund des Hakens 16 an.

Beim Schließen des Verschlusses laufen zunächst die Auflaufflächen 31 und 32 aufeinander auf, wobei es zu einem Heranholen senkrecht zur Bordwandebene kommt. Nachdem die beiden Auflaufflächen aufeinander angeglitten sind, kommen die beiden Druckflächen 35 und 36 in Anlage. Dadurch, daß die Druckflächen senkrecht zu den angreifenden Kräften verlaufen, wird eine gute Kraftübertragung gewährleistet.

## Patentansprüche

1. Riegelspannverschluß für Türen, abklappbare Bordwände oder dergleichen von Aufbauten von Nutzfahrzeugen, mit einem in einer Einbauwanne (1) geführten, längenverstellbaren Riegel (10, 12), der aus einem Riegelstumpf (10) und aus einem Verriegelungsglied (12) mit einem Eingriffsteil (14) besteht und der mittels einer in der Einbauwanne (1) angelenkten Handhabe (2) über ein einerseits an der Handhabe (2) und andererseits am Riegelstumpf (10) angelenktes Verbindungsglied (15) in Verriegelungsstellung bringbar ist, in welcher sich die Anlenkachse (17) zwischen dem Verbindungsglied (15) und der Handhabe (2) in bezug auf die Anlenkachse (4) zwischen der Handhabe (2) und der Einbauwanne (1) und in bezug auf die Anlenkachse (16) zwischen dem Verbindungsglied (15) und dem Riegelstumpf (10) in einer Übertotpunktstellung befindet, und mit einem an einem festen Teil des Aufbaus zu befestigenden Gegenelement (29), gegen welches in Verriegelungsstellung der Riegel (10, 12) verspannt ist, dadurch gekennzeichnet, daß die Anlenkachse (17) zwischen der Handhabe (2) und dem Verbindungsglied (15) durch ein Langloch (18) im Verbindungsglied (15) hindurchgeht,

daß die durch das Langloch (18) hindurchgehende Achse (17) von einer Feder (20) beaufschlagt ist, derart, daß die Achse (17) zum riegelseitigen Ende des Langlochs (18) gedrängt wird, und daß zwischen dem Riegelstumpf (10) und der Einbauwanne (1) mindestens eine den Riegelstumpf (10) in Offenstellung drängende Feder (11) angeordnet ist.

2. Riegelspannverschluß nach Anspruch 1, dadurch gekennzeichnet, daß die Feder (11) eine Zugschraubenfeder ist, die einerseits an der Einbauwanne (1) und andererseits am Riegelstumpf eingehakt ist.

3. Riegelspannverschluß nach Anspruch 2, dadurch gekennzeichnet, daß die Zugschraubenfeder (11) in einer der Einbauwanne (1) zugewandten Auskehlung (7) im Riegelstumpf (10) untergebracht ist.

4. Riegelspannverschluß nach Anspruch 1, 2 oder 3, dadurch gekennzeichnet, daß das Verbindungsglied (15) der Länge nach und senkrecht zu den Anlenkachsen (16, 17) unterteilt ist, wobei in mindestens einem der Teile anschließend and das Langloch (18) auf der dem anderen Teil zugewandten Seite eine zum rückwärtigen Ende des Verbindungsglieds gerichtete längliche Vertiefung (19) ausgebildet ist, und daß in dieser Vertiefung (19) eine Druckschraubenfeder (20) untergebracht ist, die sich an der durch las Langloch (18) hindurchgehenden Anlenkachse (17) abstützt.

5. Riegelspannverschluß nach einer der vorhergehenden Ansprüche, dadurch gekennzeichnet, daß er in der Verriegelungsstellung durch eine der Handhabe (2) zugeordnete Sicherung gesichert ist, die aus einem auf der Oberseite der Handhabe (2) gleitbaren und durch eine Feder (51) in Sicherungsstellung gedrückten Schieber (44) besteht, mit der mindestens einem Haken (46) durch eine Aussparung (45) in der Handhabe (2) hindurchragt und mit diesem Haken (46) in Sicherungsstellung in einem an der Einbauwanne (1) angebrachten Gegenhaken (47) eingreift, wobei der Schieber (44) durch einen an der Unterseite der Handhabe anliegenden und in mindestens eine Ausnehmung (49) des Schiebers (44) einrastenden Federklipp (48) gehalten wird.

6. Riegelspannverschluß nach Anspruch 5, dadurch gekennzeichnet, daß der Schieber mit zwei gleichgerichteten und jeweils seitlich am Schieber angeordneten Haken (46) durch die Aussparung (45) hindurchragt, wobei beide Haken in den Gegenhaken (47) der Einbauwanne (1) eingreifen.

7. Riegelspannverschluß nach Anspruch 6 dadurch gekennzeichnet, daß der Federklipp (48) aus einer zwischen den Haken (46) angeordneten U-förmigen Spreizblattfeder besteht.

8. Riegelspannverschluß nach Anspruch 7, dadurch gekennzeichnet, daß die Feder (51), die den Schieber (44) in Sicherungsstellung drückt, aus einer Druckschraubenfeder besteht, die zwischen den beiden Haken (46) angeordnet ist und sich einerseits an einer seitlichen Begrenzung (52) der Aussparung (45) und andererseits an einem gekröpften Ansatz (50) am Stegteil der U-förmigen Spreizblattfeder (48) abstützt, wobei das Ende des grkröpften Ansatzes (50) in das Ender der Druckschraubenfeder (51) hineinragt.

9. Riegelspannverschluß nach einem der vorhergehenden Ansprüche, dadurch gekennzeichnet, daß das Eingriffsteil (14) als Haken (26) mit zurückspringendem Ende (27) und das Gegenelement (29) als Tasche ausgebildet ist, wobei das zurückspringende Ende (27) eine Aushehmung (30) und eine geneigte, zum Hakengrund weisende Auflauffläche (31) sowie eine sich daran anschließende, zur Verriegelungsrichtung parallele oder höchstens leicht geneigte Anlagefläche (33) aufweist und im Hakengrund eine zur Verriegelungsrichtung senkrechte Druckfläche (36) vorgesehen ist und wobei die Tasche (29) mit entsprechenden Auflauf- (32) und Analageflächen (34) und im Bereich der Ausnehmung (30) mit einer entsprechenden Druckfläche (35) ausgebildet ist.

10. Riegelspannverschluß nach Anspruch 9, dadurch gekennzeichnet, daß die Ausnehmung (30) im zurückspringenden Ende (27) des Hakens (26) in der Mitte des zurückspringenden Endes (27) ausgebildet ist.

**Revendications**

1. Fermeture par verrou à ressort de rappel pour portes, ridelles rabattables, ou similaires, de carrousseries de véhicules utilitaires, avec un verrou (10, 12) réglable en longueur, guidé dans une cuvette (1) de montage, qui est constitué par un tronc (10) du verrou et par un élément (12) de verrouillage avec une partie (14) de prise et qui peut être amené en position de verrouillage au moyen d'une poignée (2) articulée dans le cuvette (1) de montage et d'un élément (15) de liaison, articulé d'une part sur la poignée (2) et d'autre part sur le tronc (10) du verrou, fermeture dans laquelle l'axe (17) d'articulation entre l'élément (15) de liaison et la poignée (2) se trouve par rapport à l'axe (4) d'articulation entre la poignée (2) et la cuvette (1) de montage et par rapport à l'axe (16) d'articulation entre l'élément (15) de liaison et le tronc (10) du verrou dans une position dépassant le point mort, ladite fermeture comportant en outre un contre-élément (29) à fixer sur une partie fixe de la carrosserie et contre lequel est maintenu le verrou en position de verrouillage, fermeture caractérisée en ce que l'axe (17) d'articulation entre la poignée (2) et l'élément (15) de liaison pénètre dans l'élément (15) de liaison par un trou ovale (18), en ce que l'axe (17) traversant le trou ovale (18) est sollicité par un ressort (20), de telle sorte que l'axe (17) est poussé vers l'extrémité côté verrou de trou ovale (18), et en ce qu'il est disposé, entre le tronc (10) de verrou et la cuvette (1) de montage, au moins un ressort (11) poussant le verrou en position d'ouverture.

2. Fermeture par verrou à ressort de rappel selon la revendication 1, caractérisée en ce que le ressort (11) est un ressort hélicoïdal de traction, qui est accroché d'une part à la cuvette (1) de montage et d'autre part au tronc du verrou.

3. Fermeture par verrou à ressort de rappel selon la revendication 1, caractérisée en ce que le ressort hélicoïdal (11) de traction est logé dans une gorge (7) du tronc (10) du verrou, en regard de la cuvette (1) de montage.

4. Fermeture par verrou à ressort de rappel selon la revendication 1, 2 ou 3, caractérisée en ce que, l'élément (15) de liaison est subdivisé dans sa longueur et perpendiculairement aux axes (16, 17) d'articulation; en ce qu'il est constitué, dans au moins une des parties se raccordant au trou ovale (18), sur la face orientée vers l'autre, partie, une cavité (19) allongée dirigée vers l'extrémité arrière de l'élément de liaison et en ce qu'est logé dans cette cavité un ressort hélicoïdal (20) de pression, qui s'appuie sur l'axe (17) d'articulation traversant le trou ovale (18).

5. Fermeture par verrou à ressort de rappel selon une des revendications qui précèdent, caractérisée en ce qu'elle est, en position de verrouillage, arrêtée par la sûreté ajointe à la poignée (2), qui est constituée par un poussoir (44) pouvant glisser sur la face supérieure de la poignée (2) et est poussé par un ressort (51) en position de sécurité, poussoir qui fait saillie par au moins un crochet (46) à travers un évidement (45) de la poignée (2) et est en prisme par ce crochet (46), en position de sécurité, avec un contre-crochet (47) aménagé sur la cuvette (1) de montage, et en ce que le poussoir (44) est maintenu par une agrafe à ressort (48) s'appuyant sur la face inférieure de la poignée et s'encliquetant dans au moins un évidement (49) de poussoir (44).

6. Fermeture par verrou à ressort de rappel selon la revendication 5, caractérisée en ce que le poussoir fait saillie à travers l'évidement (45) par deux crochets (46) dirigés dans le même sens et disposés respectivement sur le côté du poussoir, et en ce que ces deux crochets, s'accrochent sur les contre-crochets (47) de la cuvette (1) de montage.

7. Fermeture par verrou à ressort de rappel selon la revendication 6, caractérisée en ce que l'agrafe à ressort (48) est constituée par un ressort d'écartement, à lame en forme d'U, disposé entre les crochets (46).

8. Fermeture par verrou à ressort de rappel selon la revendication 7, caractérisée en ce que le ressort (51), qui repousse le poussoir (44) en position de sécurité, est constitué par un ressort hélicoïdal de pression, qui est disposé entre les deux crochets (46) et s'appuie d'une part sur une délimitation (52) latérale de l'évidement (45) et d'autre part sur un appendice (50) coudé de la partie formant tranverse du ressort (48) d'écartement à lame en forme d'U et en ce que l'extrémité de l'appendice (50) coudé pénètre dans l'extrémité du ressort hélicoïdal (51) de pression.

9. Fermeture par verrou à ressort de rappel selon l'une des revendications qui précèdent, caractérisée en ce que l'organe (14) de prise est constitué par un crochet ayant une extrémité (27) avec rebond en arrière et le contre-élément (29) est constitué par une poche; en ce que l'extrémité (27) avec rebond en arrière présente un évidement (30) et une surface (31) d'engagement, inclinée, orientée vers la base du crochet, ainsi qu'une surface (33) d'appui se raccordant à celle-ci, qui est parallèle à la direction du verrouillage, ou tout au plus légèrement inclinée; en ce qu'il est prévu dans le fond du crochet une surface (36) de compression perpendiculaire à la direction du verrouillage et en ce que la poche (29) est constituée avec des surfaces (32) d'engagement et (34) d'appui appropriées et, dans la région de l'évidement, avec une surface (35) de compression appropriée.

10. Fermeture par verrou à ressort de rappel selon la revendication 9, caractérisée en ce que l'évidement (30) est constitué, dans l'extrémité (27) avec rebond en arrière du crochet (26), au milieu de ladite extrémité (27).

**Claims**

1. Locking bar toggle-type fastener for doors, folding side panels or the like of bodyworks of utility vehicles, comprising a longitudinally adjustable locking bar (10, 12) which is guided in an installation trough (1) and which consists of a bar stump (10) and a locking member (12) having an engagement portion (14) and which is adapted to be brought into the locking position by means of a handle (2) articulately connected in the installation trough (1) via a connecting member (15) connected on the one hand to the handle (2) and on the other to the locking bar stump (10), and in said locking position the articulation pin (17) between the connecting member (15) and the handle (2) is in an over-deadcentre position with respect to the articulation pin (4) between the handle (2) and the installation trough (1) and with respect to the articulation pin (16) between the connecting member (15) and the locking bar stump (10), and a counter element (29) which is to be secured to a fixed part of the bodywork and against which the locking bar (10, 12) is braced in the locking position, characterized in that the articulation pin (17) between the handle (2) and the connecting member (15) passes through a slot (18) in the connecting member (15), that the pin (17) passing through the slot (18) is subjected to the action of a spring (20) in such a manner that the pin (17) is urged towards the locking-bar-side end of the slot (18), and that between the locking bar stump (10) and the installation trough (1) at least one spring (11) urging the locking bar stump (10) into the open position is provided.

2. Locking bar toggle-type fastener according to claim 1, characterized in that the spring (11) is a tension helical spring which is attached on the one hand to the installation trough (1) and on the other to the locking bar stump.

3. Locking bar toggle-type fastener according to claim 2, characterized in that the tension helical spring (11) is accommodated in a recess (7) in the locking bar stump (10) facing the installation trough (1).

4. Locking bar toggle-type fastener according to claim 1, 2 or 3, characterized in that the connecting member (15) is divided in length and perpendicularly to the articulation pins (16, 17) and in at least one of the portions following the slot (18) on the side facing the other portion an elongated recess (19) directed towards the rear end of the connecting member is formed and that in said recess (19) a pressure helical spring (20) is accommodated which bears on the articulation pin (17) passing through the slot (18).

5. Locking bar toggle-type fastener according to any one of the preceding claims, characterized in that it is secured in the locking position by a catch which is associated with the handle (2) and which consists of a slide (44) which is slidable on the upper side of the handle (2) and is pressed by a spring (51) into the securing position and which with at least one hook (46) projects through a cutout (45) in the handle (2) and with said hook (46) in the securing position engages in a counter hook (47) attached to the installation trough (1), the slide (44) being held by a spring clip (48) which bears on the lower side of the handle and engages into at least one recess (49) of the slide (44).

6. Locking bar toggle-type fastener according to claim 5, characterized in that the slide engages with two equally directed hooks (46) arranged laterally on each side of the slide through the cutout (45), both hooks engaging into the counter hook (47) of the installation trough (1).

7. Locking bar toggle-type fastener according to claim 6, characterized in that the spring clip (48) consists of a U-shaped spreading leaf spring.

8. Locking bar toggle-type fastener according to claim 7, characterized in that the spring (51) pressing the slide (44) into the securing position consists of a pressure helical spring which is arranged between the two hooks (46) and bears on the one hand on a lateral border (52) of the cutout (45) and on the other hand on a bent-over lug (50) on the web portion of the U-shaped spreading leaf spring (48), the end of the bent-over lug (50) projecting into the end of the pressure helical spring (51).

9. Locking bar toggle-type fastener according to any one of the preceding claims, characterized in that the engagement portion (14) is formed as hook (26) with rearwardly extending end (27) and the counter element (29) as pocket, the rearwardly extending end (27) having a recess (30) and an inclined runup face (31) pointing towards the hook bottom and an adjoining engagement face (33) parallel to the locking direction or at the most slightly inclined and in the hook bottom a pressure face (36) perpendicular to the locking direction is provided and the pocket (29) is formed with corresponding runup (32) and engagement faces (34) and in the region of the recess (30) is formed with a corresponding pressure face (35).

10. Locking bar toggle-type fastener according to claim 9, characterized in that the recess (30) in the rearwardly extending end (27) of the hook (26) is formed in the centre of said rearwardly extending end (27).

FIG. 2

26 34 14 28

35
36

29 32 33 27 30 31

15

6 11 12 10 16 1 4 18 17 20 19

52 51 50 2

53

49 46 47 1 48

FIG. 1

VII

27 31

VII

11 6

16 17 3

44 43 2

II

II

29 14 30 31

12 11 10 15 4 18 19 20

45

EP 0 196 080 B1

EP 0 196 080 B1

FIG. 3

FIG. 4

FIG. 5

FIG. 6

FIG. 7

2

FIG. 8

45  51  46  50  53

52

46  48  2

FIG. 9

43  54

55  2

FIG. 10       FIG. 11

FIG. 12